# FASCICULE DE BREVET EUROPEEN

(11) **EP 3 982 009 B1**
(45) Date de publication et mention de la délivrance du brevet: **14.02.2024**
(21) Numéro de dépôt: 21199698.8
(22) Date de dépôt: 29.09.2021
(51) Int. Cl.: F16H 57/08, F16H 57/04, F02C 7/36, F16H 1/36, F16H 1/28

(54) **RÉDUCTEUR MÉCANIQUE POUR TURBOMACHINE D'AÉRONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 08.10.2020 FR 2010268
(43) Date de publication de la demande: 13.04.2022
(73) Titulaire: Safran Transmission Systems, 92700 Colombes (FR)
(72) Inventeur: LEFEBVRE, Simon Loïc Clément, 77550 MOISSY-CRAMAYEL (FR); SIMON, Adrien Louis, 77550 MOISSY-CRAMAYEL (FR)
(74) Mandataire: Gevers & Orès

(56) Documents cités:
- CN-U- 202 900 551
- JP-A- 2018 017 392
- US-A- 1 968 604
- US-A1- 2019 011 039
- US-A1- 2020 247 236

## Description

### Domaine technique de l'invention

La présente invention concerne le domaine des réducteurs mécaniques pour des turbomachines en particulier d'aéronef, et en particulier les réducteurs équipés de satellites à double étage d'engrènement.

### Arrière-plan technique

L'état de l'art comprend notamment les documents WO-A1-2010/092263, FR-A1-2 987 416, FR-A1-3 011 901, FR-A1-3 041 054, FR-A1-3 058 493, FR-A1-3 066 792, FR-A1-3 069 301, FR-A1-3 076 336, CN-U-202 900 551, JP-A- 2018 017392, US-A1-2018/247236 et US-A-1968604. Le document US 2019/011039 A1 divulgue par exemple un réducteur mécanique de turbomachine.

Le rôle d'un réducteur mécanique est de modifier le rapport de vitesse et de couple entre l'axe d'entrée et l'axe de sortie d'un système mécanique.

Les nouvelles générations de turbomachines à flux multiples, notamment celles ayant un haut taux de dilution, comportent un réducteur mécanique pour entraîner l'arbre d'une hélice carénée ou non (aussi appelé « fan »). De manière usuelle, le réducteur a pour but de transformer la vitesse de rotation dite rapide de l'arbre d'une turbine de puissance en une vitesse de rotation plus lente pour l'arbre entraînant l'hélice.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont sur le même diamètre de fonctionnement autour de l'axe des planétaires. Ces axes sont parallèles à l'axe longitudinal X.

Il existe plusieurs architectures de réducteur. Dans l'état de l'art des turbomachines à flux multiples, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Par ailleurs, chaque satellite est centré et guidé en rotation autour d'un axe par un palier qui est porté par le porte-satellites.

Dans un réducteur de ce type, le solaire est susceptible de se déplacer axialement en fonctionnement, en particulier lorsqu'il est accouplé à son arbre d'entrainement par un jeu de cannelures rectilignes parallèles à son axe de rotation.

Le solaire peut comprendre une denture droite engrenée avec des dentures droites complémentaires des satellites. Dans ce cas, le solaire est également susceptible de se déplacer axialement en fonctionnement.

Le solaire peut comprendre une denture hélicoïdale engrenée avec des dentures hélicoïdales complémentaires des satellites. Dans ce cas, cet engrènement génère des efforts axiaux sur la denture du solaire qu'il convient de reprendre afin de limiter les concentrations de contraintes dans le solaire. De plus et surtout, si cet effort axial n'est pas repris par une butée alors le solaire risque de se déplacer axialement et de toucher un stator ou de se désengager des satellites.

Il est donc utile voire nécessaire de garantir une position axiale du solaire en fonctionnement. Toutefois, il est important de conserver un certain degré de liberté en direction radiale du solaire dans le réducteur afin d'éviter un hyperstatisme qui serait préjudiciable au fonctionnement du réducteur.

Une solution consiste à guider le solaire vis-à-vis du porte-satellites par un palier à billes qui permet de reprendre les efforts axiaux auxquels le solaire est soumis en fonctionnement. Cependant, l'inconvénient de cette solution est notamment l'encombrement axial important du palier.

Il existe donc un besoin d'identifier une solution simple et efficace à ce problème de positionnement axial et de reprise des efforts du solaire en fonctionnement.

### Résumé de l'invention

L'invention concerne un réducteur mécanique de turbomachine, en particulier d'aéronef, ce réducteur comportant :
- un solaire ayant un axe de rotation et comportant une denture externe,
- une couronne qui s'étend autour du solaire et qui comporte une denture interne,
- des satellites qui sont engrenés avec le solaire et la couronne et qui comportent chacun une première denture qui a un diamètre moyen et qui est engrenée avec la denture du solaire, et une seconde denture qui a un diamètre moyen et qui est engrenée avec la denture interne de la couronne, ledit diamètre moyen de la seconde denture étant différent du diamètre moyen de la première denture,

- un porte-satellites qui supporte des paliers de guidage en rotation des satellites autour de seconds axes parallèles au premier axe, et
- un circuit de lubrification du réducteur,
   le porte-satellites comprenant au moins une butée axiale qui comporte une surface d'appui sur laquelle ledit solaire est destiné à prendre appui axialement en fonctionnement, ledit circuit de lubrification comprenant au moins un canal configuré pour acheminer de l'huile jusque sur ladite surface d'appui et pour former un film d'huile entre cette surface d'appui et le solaire. L'invention propose ainsi d'équiper le réducteur avec une butée hydrodynamique configurée pour coopérer avec le solaire.

Dans la présente demande, on entend par « butée hydrodynamique », une butée sur laquelle est présent un film d'huile.

Le solaire est configuré pour venir en appui axialement sur la butée, le film d'huile étant intercalé entre le solaire et la surface d'appui de la butée. La butée peut ainsi assurer un positionnement axial correct du solaire en fonctionnement, et/ou une reprise des efforts axiaux auxquels le solaire est soumis en fonctionnement.

Par ailleurs, le solaire conserve une liberté de déplacement radial vis-à-vis du solaire, en glissant en direction radiale sur le film d'huile.

Enfin, l'invention est avantageuse dans la mesure où elle n'impacte pas l'encombrement axial du réducteur.

Le réducteur selon l'invention peut comprendre une ou plusieurs des caractéristiques suivantes, prises isolément les unes des autres, ou en combinaison les unes avec les autres :
- ledit au moins un canal est formé dans le porte-satellites ou dans un élément porté par le porte-satellites ;
- la butée et la surface d'appui ont une forme générale annulaire et s'étendent autour dudit premier axe ;
- la butée est formée ou portée par un rebord annulaire interne du porte-satellites ;
- ledit au moins un canal s'étend ou est formé en partie dans ledit rebord ;
- ledit au moins un canal comprend au moins un canal s'étendant dans le porte-satellites, perpendiculairement audit premier axe, et au moins un autre canal s'étendant dans le porte-satellites, parallèlement audit premier axe, ledit au moins un canal s'étendant depuis ledit au moins un autre canal jusqu'au niveau de ladite surface d'appui ;
- une rondelle ou un revêtement en matériau anti-friction est situé sur ladite surface d'appui ;
- la rondelle est engagée sur une portée cylindrique dudit porte-satellites, cette portée cylindrique s'étendant autour dudit premier axe ;
- ladite au moins une butée est située sur un côté du solaire, et ledit réducteur comprend une autre butée axiale située du côté opposé au solaire et sur laquelle le solaire est apte à prendre appui axialement en fonctionnement ; et
   -- ledit au moins un canal comprend une extrémité radialement interne raccordée à un orifice de sortie d'huile ;
   -- ledit orifice de sortie d'huile débouche sur ladite surface d'appui de façon à l'alimenter en huile et à former un film d'huile s'étendant sur la surface d'appui.

La présente invention concerne encore une turbomachine d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine d'aéronef,
[Fig.2] la figure 2 est une section axiale en vue partielle d'un réducteur mécanique,
[Fig.3] la figure 3 est une vue schématique en coupe axiale d'un réducteur mécanique équipé de satellites à double étage d'engrènement, et illustre la technique antérieure à l'invention,
[Fig.4] la figure 4 est une vue schématique en coupe axiale d'un réducteur mécanique équipé de satellites à double étage d'engrènement, et illustre un mode de réalisation d'un réducteur mécanique selon l'invention,
[Fig.5] la figure 5 une vue à plus grande échelle d'une partie de la figure 4.

### Description détaillée de l'invention

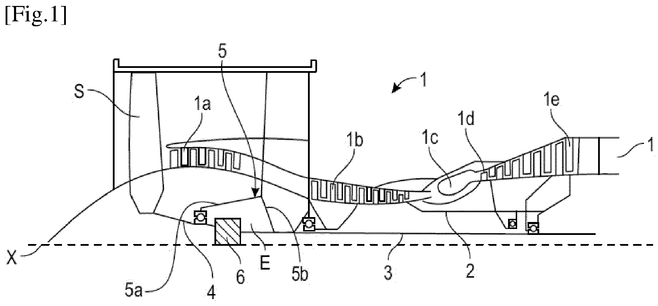

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

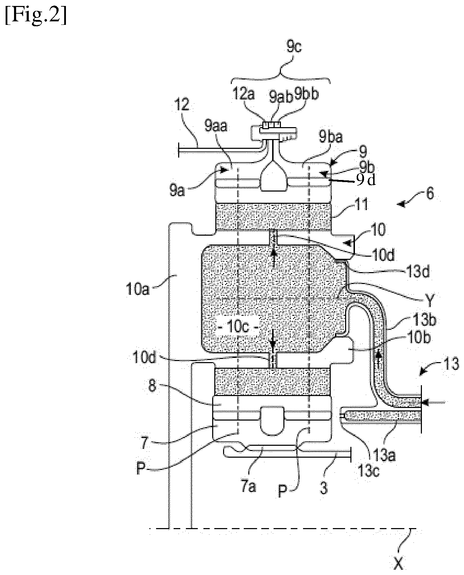

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demicouronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

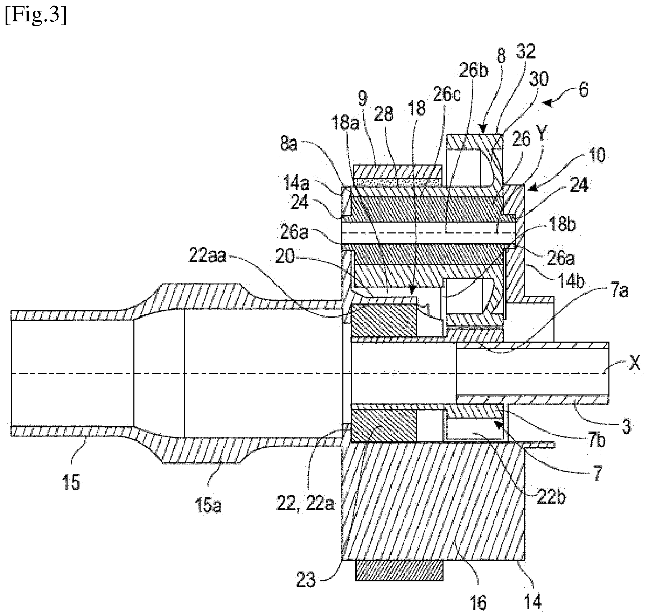

La figure 3 représente un réducteur 6 de turbomachine d'aéronef selon la technique antérieure.

Le réducteur 6 comprend un porte-satellites 10 qui est configuré pour être mobile en rotation autour de l'axe X et qui est du type monobloc, c'est-à-dire formé d'une seule pièce.

Ce porte-satellites 10 comprend une cage 14 et une portion d'arbre 15.

La portion d'arbre 15 a une forme générale tubulaire et allongée le long de l'axe X et comprend une extrémité longitudinale libre, ici à gauche sur les dessins, et une extrémité longitudinale opposée de liaison à la cage 14.

La portion d'arbre 15 comprend une denture externe 15a d'engrènement, par exemple avec une soufflante.

La cage 14 comporte deux flasques annulaires 14a, 14b qui sont parallèles et à distance l'un de l'autre et s'étendent perpendiculairement à l'axe X. Les flasques 14a, 14b ont une forme générale circulaire et sont centrées sur l'axe X.

Le flasque 14a, appelé premier flasque, à gauche sur le dessin, est relié à la portion d'arbre 15. L'autre flasque 14b est appelé second flasque.

Les flasques 14a, 14b sont reliés entre eux par des ponts de matière 16 qui définissent entre eux et avec les flasques des logements 18 configurés pour recevoir les satellites 8. Les logements 18 débouchent radialement vers l'extérieur à la périphérie externe de la cage 14, et débouchent également radialement à l'intérieur en traversant une paroi tubulaire interne 20 de la cage 14. Les ponts de matière 16 peuvent être pleins ou en partie évidés, comme illustré à la figure 3.

La paroi 20 s'étend autour de l'axe X, depuis le premier flasque 14a en direction du second flasque 14b. Elle s'étend ici sensiblement dans le prolongement axial de la portion d'arbre 15. Cette paroi 20 délimite intérieurement un espace 22 de logement du solaire 7.

Cet espace 22 comprend deux parties adjacentes. La première partie 22a est entourée par la paroi 20 qui comprend une surface cylindrique interne 22a de montage d'un palier 23 de guidage d'une extrémité du solaire 7. La seconde partie 22b, située au niveau des débouchés des logements 18, reçoit l'extrémité opposée du solaire 7, qui comprend une denture externe 7b d'engrènement avec les satellites 8. Le solaire 7 comprend en outre une denture interne 7a d'accouplement à un arbre par exemple de turbine.

Les logements 18 comportent chacun une première partie 18a qui est située du côté du premier flasque 14a, et une seconde partie 18b qui est située du côté du second flasque 14b. Les logements 18 débouchent à la périphérie externe de la cage 14, au niveau de ses deux parties 18a, 18b, et à la périphérie interne de la cage 14, au niveau des secondes parties 18b seulement.

Les flasques 14a, 14b comprennent des trous ou orifices 24 alignés de montage des satellites 8 et en particulier de paliers hydrodynamiques 26 de guidage de ces satellites 8.

Chaque palier hydrodynamique 26 comprend un corps autour duquel est situé un film d'huile sous pression.

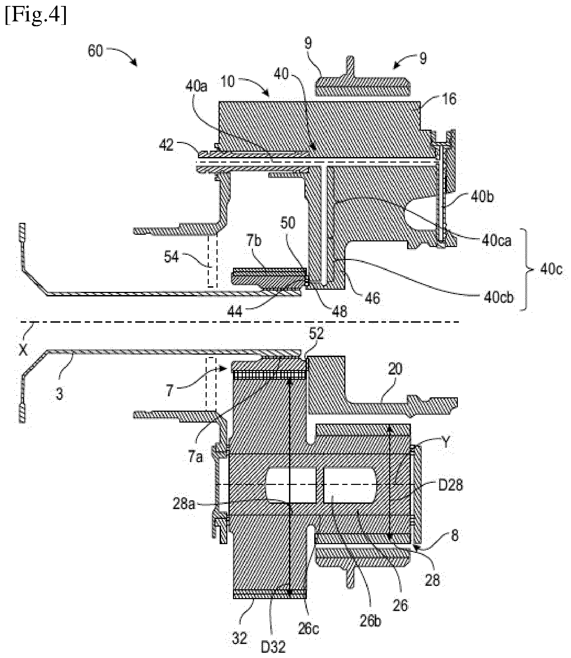

Le corps d'un palier 26 est représenté seul à la figure 4. Il a une forme générale cylindrique qui s'étend le long de l'axe Y et dont les extrémités longitudinales comprennent des extensions 26a logées dans les orifices 24 formant des sièges.

Le corps du palier 26 peut également être tubulaire et comprendre un alésage interne 26b de circulation d'huile qui communique en général avec des conduits d'amenée d'huile jusqu'à une surface cylindrique externe 26c du corps en vue de la formation du film d'huile entre cette surface 26c et une surface cylindrique interne du satellite 8.

Les satellites 8 sont du type à double étage d'engrènement, comme évoqué dans ce qui précède, et comprennent chacun un corps tubulaire 8a relié par un voile 30 à une première denture 32 externe, le corps 8a étant lui-même équipé d'une seconde denture 28.

Les dentures 28, 32 sont disposées à côté l'une de l'autre et plus particulièrement sont situées respectivement dans deux plans perpendiculaires à l'axe Y.

La seconde denture 28, située à gauche sur les dessins, est située du côté du premier flasque 14a et donc au niveau de la première partie 18a du logement. Comme cela est visible à la figure 3, cette denture 28 est engrenée avec la couronne 9.

La première denture 32, située à droite sur les dessins, est située du côté du second flasque 14b et donc au niveau de la seconde partie 18b du logement. Comme cela est visible à la figure 3, cette denture 32 est engrenée avec la denture 7b du solaire 7.

La couronne 9 est portée par un porte-couronne qui n'est pas représenté dans les dessins.

L'invention propose une solution pour garantir la position axiale du solaire 7 et/ou reprendre les efforts axiaux auquel le solaire est soumis en fonctionnement, en particulier lorsque les dentures 7b et 32 sont hélicoïdales.

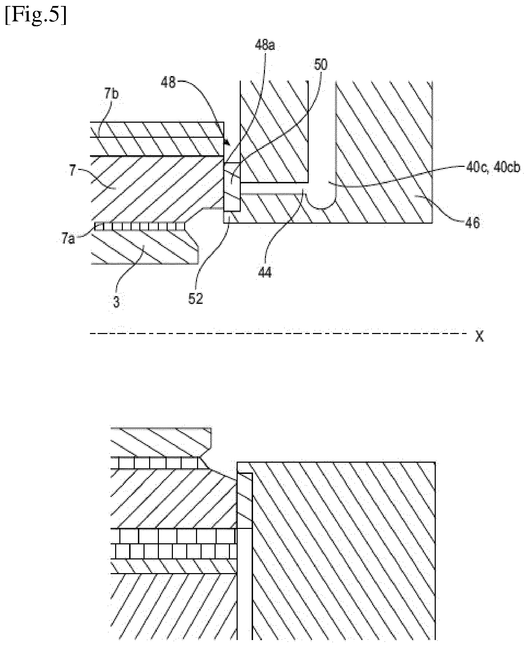

Les figures 4 et 5 illustrent un mode de réalisation d'un réducteur 60 selon l'invention.

Le réducteur 60 des figures 4 et 5 comprend l'ensemble des caractéristiques du réducteur 6 décrites dans ce qui précède en relation avec la figure 3 dans la mesure où elles ne sont pas contraires ou ne contredisent pas ce qui suit. Les références utilisées dans les figures 4 et 5 et déjà utilisées dans la figure 3 désignent donc des éléments identiques ou similaires.

Le satellite 8 est du type à double étage d'engrènement et comprend une première denture 32 et une seconde denture 28.

Les dentures 28, 32 sont disposées à côté l'une de l'autre et plus particulièrement sont situées respectivement dans deux plans perpendiculaires à l'axe Y.

La seconde denture 28, située à droite sur le dessin, est destinée à être engrenée avec la couronne 9. La première denture 32, située à gauche sur le dessin, est destinée à être engrenée avec la denture 7b du solaire 7.

La denture 28 a un diamètre ou diamètre moyen D28 qui est inférieur au diamètre ou diamètre moyen D32 de la denture 32 dans l'exemple représenté.

Le corps du palier hydrodynamique 26 est creux et comprend un alésage interne 26b de circulation d'huile qui communique avec un circuit de lubrification 40 du réducteur. Des conduits internes (non représentés) sont formés dans le corps du palier 26 et acheminent l'huile depuis l'alésage interne 26b jusqu'à la surface de guidage 26c du corps en vue de la formation d'un film d'huile entre cette surface 26c et la surface 28a en regard du satellite 8. La surface 26c s'étend à l'intérieur et en regard de la surface 28a et avec un jeu prédéterminé en fonction de l'épaisseur du film d'huile destiné à être intercalé entre ces surfaces.

Dans l'exemple représenté, le circuit de lubrification 40 comprend des canaux 40a, 40b, 40c, etc., formés directement dans le porte-satellites 10 ou dans des éléments rapportés et fixés sur le porte-satellites.

Un premier canal longitudinal 40a s'étend parallèlement à l'axe X à travers une majeure partie du porte-satellites 10 et comprend une extrémité longitudinale, ici à gauche sur la figure 4, dans laquelle est engagé un embout mâle 42 de raccordement fluidique à une source d'huile sous pression. L'extrémité longitudinale opposée de ce premier canal 40a, ici à droite, est raccordée à un canal 40b qui s'étend perpendiculairement au premier canal 40a et sensiblement radialement par rapport à l'axe X. Ce canal 40b permet par exemple d'acheminer de l'huile jusqu'aux alésages 26b précités des satellites 8.

Le premier canal 40a est en outre raccordé, sensiblement en son milieu, à un troisième canal 40c qui s'étend perpendiculairement au premier canal 40a et sensiblement radialement par rapport à l'axe X. L'extrémité radialement externe du canal 40c est raccordée au canal 40a, et son extrémité radialement interne est raccordée à un orifice 44 de sortie d'huile.

Le canal 40c comprend une partie radialement externe 40ca formé dans un des ponts de matière 16 précités, et une partie radialement interne 40cb formée dans un rebord annulaire interne 46 du porte-satellites. Ce rebord 46 est relié à l'ensemble des ponts de matière 16 ainsi qu'à la paroi cylindrique 20 du porte-satellites 10.

La périphérie interne de ce rebord 46 forme une butée axiale 48 pour le solaire 7, et en particulier une butée hydrodynamique du fait de son alimentation en huile par le circuit 40 et en particulier le canal 40c de ce dernier.

La butée 48 comprend une surface radiale 48a, ici à gauche ou à l'amont, d'appui du solaire 7. L'orifice 44 de sortie d'huile débouche sur cette surface 48a de façon à l'alimenter en huile et à former un film d'huile s'étendant dans un plan radial, c'est-à-dire perpendiculaire à l'axe X.

Le réducteur 60 peut comprendre plusieurs orifices 44 débouchant sur la surface 48a et reliés à plusieurs paires de canaux 40a, 40c du circuit 40.

Le solaire 7 est destiné à prendre appui axialement sur la butée 48 et le film d'huile, cette butée 48 étant donc apte à reprendre les efforts axiaux auquel le solaire 7 est soumis en fonctionnement de façon à ce que ces efforts transitent par le porte-satellites 10.

De manière optionnelle, une rondelle 50 ou un revêtement anti-friction peut être situé sur la surface d'appui 48a. Le matériau anti-friction de la rondelle 50 ou du revêtement limite l'usure par contact et frottement du solaire 7 et de la butée 48. Le revêtement peut être déposé sur la butée 48 par toute technique appropriée. La rondelle 50 peut être engagée sur une portée cylindrique 52 du porte-satellites 10 située à la périphérie interne du rebord 46. La rondelle 50 peut être fixée et retenue sur cette portée 52 par frettage par exemple.

En fonctionnement, le solaire 7 peut ainsi venir en appui axial sur la butée 48 afin que cette dernière reprenne les efforts axiaux liés à l'engrènement du solaire 7 avec les satellites 8, comme évoqué dans ce qui précède.

Dans l'exemple représenté, la butée 48 est située d'un côté du solaire 7, ici à droite ou à l'aval. En variante, la butée 48 pourrait être située du côté opposé, donc à gauche ou à l'amont. Ce choix peut notamment dépendre du sens d'enroulement des dentures 7b, 28, 32 du solaire 7 et des satellites 8, la butée 48 étant destinée à être positionnée du côté où le solaire 7 est susceptible de se déplacer en fonctionnement du fait de ce sens d'enroulement et des sens de rotation du solaire et des satellites.

Le réducteur 60 pourrait être équipé d'une butée 54 additionnelle du côté opposé à la butée 48. Cette autre butée 54, située à gauche sur le dessin, comprendrait donc une surface d'appui sur laquelle le solaire 7 serait apte à prendre appui axialement en fonctionnement.

L'invention peut apporter de nombreux avantages parmi lesquels :
- un faible encombrement axial lié à la fonction de butée axiale du solaire, lié à la technologie de butée hydrodynamique qui utilise un film mince d'huile,
- l'acheminement d'huile jusqu'au film par le circuit de lubrification existant du réducteur,
- en cas de coupure de l'alimentation en huile, le revêtement ou la rondelle anti-friction assure une continuité de la fonction de butée axiale,
- en cas de faible charge sur le solaire et de déplacement de celui-ci du côté opposé à la butée hydrodynamique, la butée additionnelle optionnelle peut maintenir le solaire en position.

## Revendications

1. Réducteur (60) mécanique de turbomachine (1), en particulier d'aéronef, ce réducteur comportant :
- un solaire (7) ayant un premier axe (X) de rotation et comportant une denture externe (7b),
- une couronne (9) qui s'étend autour du solaire (7) et qui comporte une denture interne (9d),
- des satellites (8) qui sont engrenés avec le solaire (7) et la couronne (9) et qui comportent chacun une première denture (32) qui a un diamètre moyen (D32) et qui est engrenée avec la denture (7b) du solaire (7), et une seconde denture (28) qui a un diamètre moyen (D28) et qui est engrenée avec la denture interne (9d) de la couronne (9), ledit diamètre moyen (D28) de la seconde denture (28) étant différent dudit diamètre moyen (D32) de la première denture (32),
- un porte-satellites (10) qui supporte des paliers (26) de guidage en rotation des satellites (8) autour de seconds axes (Y) parallèles au premier axe (X), et
- un circuit (40) de lubrification du réducteur,
le porte-satellites (10) comprenant au moins une butée axiale (48) qui comporte une surface d'appui (48a) sur laquelle ledit solaire (7) est destiné à prendre appui axialement en fonctionnement, ledit circuit de lubrification (40) comprenant au moins un canal (40a, 40c), **caractérisé en ce que** ledit au moins un canal (40a, 40c) est configuré pour acheminer de l'huile jusque sur ladite surface d'appui (48a) et pour former un film d'huile entre cette surface d'appui (48a) et le solaire (7).

2. Réducteur (60) selon la revendication 1, dans lequel ledit au moins un canal (40a, 40c) est formé dans le porte-satellites (10) ou dans un élément porté par le porte-satellites (10).

3. Réducteur (60) selon la revendication 1 ou 2, dans lequel la butée (48) et la surface d'appui (48a) ont une forme générale annulaire et s'étendent autour dudit premier axe (X).

4. Réducteur (60) selon l'une des revendications précédentes, dans lequel la butée (48) est formée ou portée par un rebord (46) annulaire interne du porte-satellites (10).

5. Réducteur (60) selon la revendication précédente, dans lequel ledit au moins un canal (40a, 40c) s'étend ou est formé en partie dans ledit rebord (46).

6. Réducteur (60) selon l'une des revendications précédentes, dans lequel ledit au moins un canal (40a, 40c) comprend au moins un canal (40c) s'étendant dans le porte-satellites (10), perpendiculairement audit premier axe (X), et au moins un autre canal (40a) s'étendant dans le porte-satellites (10), parallèlement audit premier axe (X), ledit au moins un canal (40c) s'étendant depuis ledit au moins un autre canal (40a) jusqu'au niveau de ladite surface d'appui (48a).

7. Réducteur (60) selon l'une des revendications précédentes, dans lequel une rondelle (50) ou un revêtement en matériau anti-friction est situé sur ladite surface d'appui (48a).

8. Réducteur (60) selon la revendication précédente, dans lequel la rondelle (50) est engagée sur une portée cylindrique (52) dudit porte-satellites (10), cette portée cylindrique (52) s'étendant autour dudit premier axe (X).

9. Réducteur (60) selon l'une des revendications précédentes, dans lequel ladite au moins une butée (48) est située sur un côté du solaire (7), et ledit réducteur comprend une autre butée axiale (54) située du côté opposé au solaire (7) et sur laquelle le solaire (7) est apte à prendre appui axialement en fonctionnement.

10. Turbomachine (1) d'aéronef, comportant un réducteur (60) selon l'une des revendications précédentes.

## Patentansprüche

1. Mechanisches Untersetzungsgetriebe (60) einer Turbomaschine (1), insbesondere eines Luftfahrzeugs, wobei dieses Untersetzungsgetriebe umfasst:
- ein Sonnenrad (7), das eine erste Drehachse (X) aufweist und eine äußere Verzahnung (7b) umfasst,
- einen Kranz (9), der sich um das Sonnenrad (7) erstreckt und der eine Innenverzahnung (9d) umfasst,
- Planeten (8), die mit dem Sonnenrad (7) und der Kranz (9) verzahnt sind und die jeweils eine erste Verzahnung (32), die einen mittleren Durchmesser (D32) aufweist und die mit der Verzahnung (7b) des Sonnenrads (7) verzahnt ist, und eine zweite Verzahnung (28), die einen mittleren Durchmesser (D28) aufweist und die mit der inneren Verzahnung (9b) der Kranz (9) verzahnt ist, umfassen, wobei der mittlere Durchmesser (D28) der zweiten Verzahnung (28) sich von dem mittleren Durchmesser (D32) der ersten Verzahnung (32) unterscheidet,
- einen Planetenträger (10), der Lager (26) zur drehenden Führung der Planeten (8) um zweite Achsen (Y), die parallel zur ersten Achse (X) sind, stützt, und
- einen Schmiermittelkreis (40) des Untersetzungsgetriebes,
wobei der Planetenträger (10) mindestens einen axialen Anschlag (48) umfasst, der eine Auflagefläche (48a) umfasst, auf der das Sonnenrad (7) im Betrieb axial aufliegen soll, wobei der Schmiermittelkreis (40) mindestens einen Kanal (40a, 40c) umfasst, **dadurch gekennzeichnet, dass** der mindestens eine Kanal (40a, 40c) dazu ausgelegt ist, Öl bis zur Auflagefläche (48a) zuzuführen und einen Ölfilm zwischen dieser Auflagefläche (48a) und dem Sonnenrad (7) zu bilden.

2. Untersetzungsgetriebe (60) nach Anspruch 1, wobei der mindestens eine Kanal (40a, 40c) im Planetenträger (10) oder in einem von dem Planetenträger (10) getragenen Element gebildet ist.

3. Untersetzungsgetriebe (60) nach Anspruch 1 oder 2, wobei der Anschlag (48) und die Auflagefläche (48a) eine allgemeine ringförmige Form aufweisen und sich um die erste Achse (X) erstrecken.

4. Untersetzungsgetriebe (60) nach einem der vorstehenden Ansprüche, wobei der Anschlag (48) von einem inneren ringförmigen Rand (46) des Planetenträgers (10) gebildet oder getragen wird.

5. Untersetzungsgetriebe (60) nach dem vorstehenden Anspruch, wobei der mindestens eine Kanal (40a, 40c) sich teilweise im Rand (46) erstreckt oder darin gebildet ist.

6. Untersetzungsgetriebe (60) nach einem der vorstehenden Ansprüche, wobei der mindestens eine Kanal (40a, 40c) mindestens einen Kanal (40c), der sich im Planetenträger (10) senkrecht zur ersten Achse (X) erstreckt, und mindestens einen anderen Kanal (40a), der sich im Planetenträger (10) parallel zur ersten Achse (X) erstreckt, umfasst, wobei der mindestens eine Kanal (40c) sich ausgehend von dem mindestens einen anderen Kanal (40a) bis zur Auflagefläche (48a) erstreckt.

7. Untersetzungsgetriebe (60) nach einem der vorstehenden Ansprüche, wobei sich eine Scheibe (50) oder eine Verkleidung aus Antifriktionsmaterial auf der Auflagefläche (48a) befindet.

8. Untersetzungsgetriebe (60) nach dem vorstehenden Anspruch, wobei die Scheibe (50) mit einem Zylinderlager (52) des Planetenträgers (10) in Eingriff steht, wobei dieses Zylinderlager (52) sich um die erste Achse (X) erstreckt.

9. Untersetzungsgetriebe (60) nach einem der vorstehenden Ansprüche, wobei der mindestens eine Anschlag (48) sich auf einer Seite des Sonnenrads (7) befindet und das Untersetzungsgetriebe einen anderen axialen Anschlag (54) umfasst, der sich auf der gegenüberliegenden Seite des Sonnenrads (7) befindet und geeignet ist, im Betrieb auf dem das Sonnenrad (7) axial aufzuliegen.

10. Turbomaschine (1) eines Luftfahrzeugs, umfassend ein Untersetzungsgetriebe (60) nach einem der vorstehenden Ansprüche.

## Claims

1. A mechanical reduction gear (60) of a turbine engine (1), in particular an aircraft, this reduction gear comprising:
- a sun gear (7) having a first axis (X) of rotation and comprising an external toothing (7b),
- a ring gear (9) which extends around the sun gear (7) and which comprises an internal toothing (9d),
- planet gears (8) which are in mesh with the sun gear (7) and the ring gear (9) and which each comprise a first toothing (32) which has an average diameter (D32) and which is in mesh with the toothing (7b) of the sun gear (7) and a second toothing (28) which has an average diameter (D28) and which is in mesh with the internal toothing (9d) of the ring gear (9), said average diameter (D28) of the second toothing (28) being different from said average diameter (D32) of the first toothing (32),
- a planet carrier (10) which supports bearings (26) for guiding the planet gears (8) in rotation around second axes (Y) parallel to the first axis (X), and
- a lubrication circuit (40) of the reduction gear,
the planet carrier (10) comprising at least one axial abutment (48) which comprises a bearing surface (48a) on which said sun gear (7) is intended to bear axially in operation, said lubrication circuit (40) comprising at least one channel (40a, 40c), **characterized in that** said at least one channel (40a, 40c) is configured to convey oil onto said bearing surface (48a) and to form a film of oil between this bearing surface (48a) and the sun gear (7).

2. The reduction gear (60) of claim 1, wherein said at least one channel (40a, 40c) is formed in the planet carrier (10) or in an element carried by the planet carrier (10).

3. The reduction gear (60) according to claim 1 or 2, wherein the abutment (48) and the bearing surface (48a) are generally annular in shape and extend around said first axis (X).

4. The reduction gear (60) according to any of the preceding claims, wherein the abutment (48) is formed or carried by an internal annular ledge (46) of the planet carrier (10).

5. The reduction gear (60) according to the preceding claim, wherein said at least one channel (40a, 40c) extends or is formed in part in said ledge (46).

6. The reduction gear (60) according to any of the preceding claims, wherein at least one channel (40a, 40c) comprises at least one channel (40c) extending in the planet carrier (10), perpendicularly to said first axis (X), and at least one other channel (40a) extending in the planet carrier (10), parallel to said first axis (X), said at least one channel (40c) extending from said at least one other channel (40a) to the level of said bearing surface (48a).

7. The reduction gear (60) according to any of the preceding claims, wherein a washer (50) or a coating of anti-friction material is located on said bearing surface (48a).

8. The reduction gear (60) according to the preceding claim, wherein the washer (50) is engaged on a cylindrical shaft (52) of said planet carrier (10), this cylindrical shaft (52) extending around said first axis (X).

9. The reduction gear (60) according to one of the preceding claims, wherein said at least one abutment (48) is located on one side of the sun gear (7), and said reduction gear comprises another axial abutment (54) located on the opposite side to the sun gear (7) and on which the sun gear (7) is adapted to bear axially in operation.

10. An aircraft turbine engine (1), comprising a reduction gear (60) according to one of the preceding claims.
